# EUROPEAN PATENT APPLICATION

(11) **EP 2 086 226 A1**
(43) Date of publication of application: **05.08.2009**
(21) Application number: 08101150.4
(22) Date of filing: 31.01.2008
(51) Int. Cl.: H04N 5/765, H04N 5/64

(54) **Video data processing device and external transmitting or receiving device**

(71) Applicant: Sony Corporation, Tokyo 108-0075 (JP)
(72) Inventor: Koch, Stefan c/o Stuttgart Technology Center, 70327, Stuttgart (DE)
(74) Representative: Körber, Martin Hans

(57) **Abstract**

The present invention relates to a video data processing device 1,10,20 adapted to process video data, comprising one ore more digital interfaces 2, 2' adapted to be connected to a transmitting or receiving unit 40 having an antenna 44 adapted to transmit or receive video data in a wireless communication system, each of said one or more digital interfaces 2,2' being located in a cavity 3,3' of a casing 5 of said data processing device, said cavity 3,3' being adapted to house a connected transmitting or receiving unit 40 so that said antenna 44 of said connected transmitting or receiving unit 40 is able to transmit or receive video data in said wireless communication system.

The present invention further relates to such a transmitting and receiving unit 40 adapted to be connected to a video data processing device 1,10,20 comprising
at least one antenna 44 adapted to transmit or receive video data in a wireless communication system, and
a digital interface 41 adapted to be connected to the interface 2,2' of the video data processing device 1,10,20 in order to forward video data received by said at least one antenna 44 to the video data processing device 1,10,20 or to transmit video data provided by said video data processing device 1,10,20 in said wireless communication system.

## Description

The present invention relates to a video data processing device adapted to process video data and to an external transmitting or receiving unit adapted to be connected to such a video data processing device and adapted to transmit or receive video data in a wireless communication system.

The demand for wireless data communication between stationary servers, for example a home server, and video display devices, such as liquid crystal display television sets, projectors and the like, will increase in the future. Particularly the aspect of wireless communication in an office or private environment not only has a higher aesthetic value, but also the advantage of a higher flexibility of the connections without the need to make holes in walls or ceilings in order to embed required wired connections. In addition here to, the data rates and capacities for data communication is constantly increasing, particularly with high definition television, into the Gbps range and for this reason it would be critical and costly to provide wired solutions for these communication types due to the need of equalization for non-ideal cable behaviours.

One solution for such wireless communication systems enabling data rates in the Gbps range are systems which operate in the mm-wave frequency range, i.e. in a frequency range above 30 GHz. Due to the nature of the wave propagation in such systems, different solutions can be implemented, for example systems with Omni-directional antennas, systems with directive antennas in order to reduce the influence of multi-path reflections, and/or systems in which the system gain is increased due to the supported antenna gain and the like.

The object of the present invention is therefore to provide a video data processing device with the additional functionality of transmitting or receiving video signals in a wireless communication system which is easy to implement on the one hand and provides a high flexibility and adaptability to varying usages and implementation scenarios on the other hand.

The above object is achieved by a video data processing device according to independent claim 1. The video data processing device of the present invention is adapted to process video data and comprises one ore more digital interfaces adapted to be connected to a transmitting or receiving unit having an antenna adapted to transmit or receive video data in a wireless communication system, each of said one or more digital interfaces being located in a cavity of a casing of said data processing device, said cavity being adapted to house a connected transmitting or receiving unit so that said antenna of said connected transmitting or receiving unit is able to transmit or receive video data in said wireless communication system.

In other words, the video data processing device provides the possibility to be connected to an external transmitting or receiving unit so that the video data processing device, which normally only comprises the possibility and interfaces to transmit or receive video data by means of wired connections, can be upgraded to be able to transmit or receive video data in the wireless communication system via said transmitting or receiving unit. Thus, the user does not have to pay for this extra possibility to transmit or receive wireless video data when originally purchasing the video data processing device, but can decide in a flexible manner if the additional functionality is wanted or not at a later time point. Further, by providing a cavity in the video data processing device in which the external transmitting or receiving unit is inserted in order to be connected to the digital interface, the transmitting or receiving unit connected to the video data processing device will be invisible or at least invisible to a major extend so that the design of a video data processing device is not harmed, which is for example important in case that the video data processing device is a flat-screen television set or the like.

Particularly if compared with alternative possible solutions, such as providing a separate set top box providing the wireless video data transmitting and/or receiving functionality, the solution of the present invention has the major advantage of not disturbing the original design of the video data processing device. Another logical advantage is that no additional space on or around the video display device is necessary to place a separate set top box or the like in order to provide the wireless video data transmitting or receiving functionality. By integration of the digital interface into a cavity of the casing of the video data processing device, the addition of this extra functionality does not increase the size and thus the space required for the video display device. Further, the external receiving unit can be embodied as a very small unit, which has for example a card shape or the like, so that the addition of this functionality to the video display device does not require any additional space or the increase of the size of the device. In addition, if compared with a possible alternative solution of directly integrating the wireless video data receiving functionality into the video display device, the solution proposed by the present invention has the advantage of not significantly increasing the manufacturing costs of the video data processing device since the external transmitting or receiving unit provides the functionalities of transmitting or receiving the wireless video data enabling users to flexibly choose if this additional functionality is wanted. Advantageously, the cavity is adapted to house a connected transmitting or receiving unit in its entirety and said casing comprises a window aligned with said antenna of said connected transmitting or receiving unit, said window allowing said antenna to transmit or receive video data in said wireless communication system. Thus, the design of the video data processing device is not changed or harmed since the connected transmitting or receiving unit is completely enclosed within the casing. However, in order to provide the wireless data communication functionality, the casing must not bloc the antenna of the connected transmitting or receiving unit so that a window may be provided over and/or aligned with the antenna and adapted to its radiation characteristics. Depending on the wireless communication system and the material of the casing, the window can be constructed and implemented in different ways. For example, the window can simply be an opening in the casing. However, from a design point of view in order to avoid damage to the antenna, the window may comprise a material which allows the passing of signals carrying the video data in the wireless communication system. Thus has the advantage that no accidental access would be possible to a connected transmitting or receiving unit so that the risk of damages is decreased. Further, the intrusion of dirt, dust and the like onto the connected transmitting or receiving unit can be avoided. In a further alternative limitation, the window may comprise a grid or a net which allows the passing of the signals in the wireless communication system. This is the advantage of an increased protection of the connected transmitting or receiving unit while still allowing signals to be transmitted from or to reach the antenna. Alternatively, if no window is provided, the casing, at least over the antenna, needs to comprise a material which allows the passing of the signals from and to the antenna.

Alternatively, the cavity is adapted to house all parts a connected transmitting or receiving unit except the part comprising the antenna, allowing the antenna to transmit or receive video data in said wireless communication system. In other words, the cavity is built in a way that the transmitting or receiving unit cannot be inserted completely and the part with the antenna is still sticking out from the casing. This solution has only little impact on the design of the video display device when a transmitting or receiving unit is connected but ensures that signals can be transmited or received without any problems.

Advantageously, the casing has at least two preferably flat sides which are perpendicular to each other, where in each of the two sides comprises at least one of such said digital interfaces located in a respective cavity. Hereby, a user can choose from different locations of the digital interface and the cavity in order to use the interface in cavity which provides the best connectivity to the entity to which the video data are transmitted or from which the video data are received wirelessly. This solution also enables the user to place the video data processing device anywhere in the room in the wanted location while still enabling the setting up of the best transmission or reception. Also, the video data processing device could transmit or receive wireless video data to or from two or more other devices via several transmitting or receiving units connected to several digital interfaces in respective cavities.

Further advantageously, the casing has at least one flat side comprising two of said digital interfaces located in a respective cavity, wherein said two digital interfaces are arranged perpendicular to each other. In this additional or alternative solution, it is possible to choose the digital interface in respective casing for the connection of the external transmitting or receiving unit which provides the best direction and thus the best wireless connection to the respective other video data processing devices in a flexible manner.

Advantageously, the video data processing device is a video display device adapted to display video data, wherein said cavity is adapted to house a connected receiving unit of the present invention as defined below so that said antenna of said connected receiving unit is able to receive video data in said wireless communication system and said video display device is adapted to display received video data on a video display. For example, the video display device of the present invention can be a flat screen television set, such as a liquid crystal television set, a plasma television set or the like, a projector adapted to project images onto a screen or wall or any other device adapted to display video data in some way.

Alternatively, the video data processing device can be a video source device adapted to provide video data, wherein said cavity is adapted to house a connected transmitting unit of the present invention as defined below so that said antenna of said connected transmitting unit is able to transmit video data in said wireless communication system. For example, the video source device can be a server or computer in which video data are stored, or any other kind of device adapted to store video data or to receive video data from another device, e.g. by a wired connection, and to forward to received video data to a video display device via a wireless connection as suggested by the present invention.

The above object is further achieved by a transmitting or receiving unit according to claim 10. The transmitting or receiving unit of the present invention is adapted to be connected to a video processing device according to the present invention and comprises at least one antenna adapted to transmit or receive video data in a wireless communication system, and a digital interface adapted to be connected to the interface of the video data processing device in order to forward video data received by said at least one antenna to the video data processing device to transmit video data provided by said video data processing device in said wireless communication system.

The advantages discussed above in relation to the video data processing device according to the present invention also apply to the transmitting or receiving unit of the present invention. Advantageously, the at least one antenna of the transmitting or receiving unit is located at one end of the transmitting or receiving unit and said digital interface is located at an opposite end of the transmitting or receiving unit. Hereby, the digital interface of the transmitting or receiving unit can be connected to the digital interface of the video data processing device which is located at the inner back side of the cavity so that the antenna of the transmitting or receiving unit is located near the surface of the casing either within the casing in case that the connected transmitting or receiving unit is completely housed in the casing of the video data processing device or just outside the outer surface of the casing. The antenna can be any kind of suitable antenna, but may advantageously be an omni-directional antenna or a directional antenna. Advantageously, the transmitting or receiving unit can comprise two antennas which are respectively adapted to transmit or receive video data in wireless communication system, wherein both antennas are directional antennas having directional characteristics different from each other. Thus, the two antennas can transmit or receive wireless video data independent from each other to or from different directions, for example to or from two different wireless video data processing devices or from different transmission paths from a single wireless video data source.

The transmitting or receiving unit of the present invention can either be a sole receiving device without transmitting functionality or can be a sole transmitting device without receiving functionality. Also, the transmitting or receiving unit of the present invention can be realized as a communication device comprising both a receiving and a transmitting functionality.

The communication system in which the transmitting or receiving unit is adapted to communicate may be any kind of suited wireless data communication system which is adapted to communicate data with a high data rate for example within the Gbps data range or within another suitable data range. For example, a wireless communication system which operates on the basis of electromagnetic waves in the mm-wave frequency range or above GHz may be advantageous. Also other frequency ranges may be advantageous. The digital interface used in the video data processing device and the transmitting or receiving unit of the present invention may be any kind of suitable digital interface for example but not limited to a high definition multimedia interface (HDMI), PCI-Express interface or any other suitable digital interface and so forth.

It has to be understood that the video data processing device and the transmitting or receiving device of the present invention are not limited to the processing, the receipt and/or the transmission of video data only, but may additionally be adapted to process, transmit and/or receive audio data, control data and any kind of other data.

The present invention is described in the following description of preferred embodiments in relation to the enclosed drawings, in which
Figure 1 shows an example of an indoor communication system employing video data processing devices of the present invention,
Figure 2 shows an enlarged detail of a video data processing device according to the present invention with two digital interfaces housed in respective cavities in which transmitting or receiving units of the present invention can be inserted, and
Figure 3 shows an embodiment of a transmitting or receiving unit of the present invention.

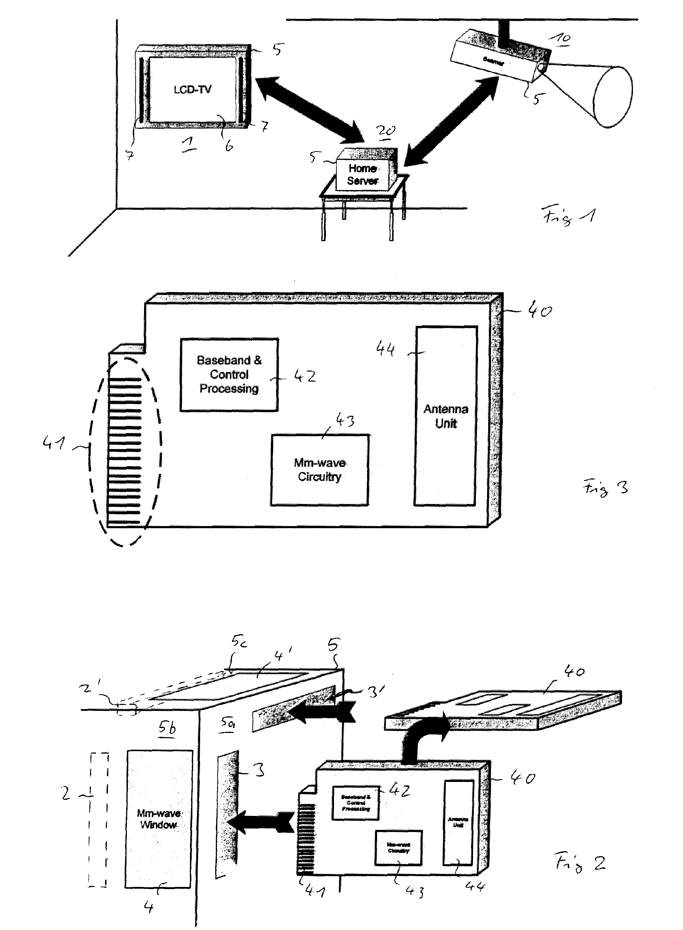

Figure 1 shows an overview over an example of an indoor communication system with video data processing devices according to the present invention, which are a television set 1, a beamer 10 and a home (media) server 20. The television set 1, which in the shown example is a flat screen television set mounted on a wall, and the beamer 10, which is ceiling-mounted, are examples of a video display device of the present invention. The home server 20 is an example for a video source device of the present invention.

The television set 1, the beamer 10 and the home server 20 each comprise one or more digital interfaces 2, 2' which are adapted to be connected to a transmitting or receiving unit 40 according to the present invention having an antenna 44 adapted to transmit or receive video data in a wireless communication system. An example of such a transmitting or receiving unit 40 is shown and explained in more detail in relation to figure 3.

The home server 20 which is an example of a video source device according to the present invention is adapted to provide video data either from a corresponding external or internal memory, hard disk or the like installed in the home server 20 or connected to the home server 20, or received from a further video data source device to which the home server 20 is connected by a wired or wireless connection.

The home server 20 comprises one or more digital interfaces which are adapted to be connected to a transmitting unit 40 of the present invention having an antenna 44 adapted to transmit video data in a wireless communication system. The transmitting unit 40 of the present invention is either implemented together with the receiving functionality in a communication unit which is adapted to transmit and to receive video data or is implemented in a transmitting unit which is exclusively adapted to transmit video data in a wireless communication system. Similarly, the receiving unit 40 to be connected to the video display device, such as the television set 1 or the beamer 10, of the present invention may be embodied as a unit which is exclusively adapted to receive video data in a wireless communication system, or may be implemented in a communication device which is adapted to transmit and to receive video data in the wireless communication system.

By means of a transmitting unit 40 according to the present invention connected to a digital interface 2, 2' of the home server 20, the home server 20 is adapted to transmit video data in the wireless communication system to the television set 1. At the television set 1, the video data are received by means of a receiving unit 40 connected to a digital interface 2,2' of the television set 1. The home server 20 is further adapted to transmit video data in the wireless communication system either via the same transmitting unit 40 or a further transmitting unit to the beamer 10, which is also adapted to receive the video data in the wireless communication system by means of a receiving unit 40 connected to a digital interface 2,2' com prised in the beamer 10.

Figure 2 shows an enlarged example of a video data processing device according to the present invention, such as the television set 1, the beamer 10 or the home server 20 shown in figure 1. Figure 2 visualizes how the respective digital interface 2,2' for connecting a receiving unit 40 or a transmitting unit 40' is located in a cavity 3,3' of a casing 5 of the video data processing device of the present invention. The size of the cavity 3,3' is adapted to house the co rresponding transmitting or receiving unit 40. Hereby, the digital interface 3,3' is located on the bac kside inside the cavity 3,3' so that the digital interface 41 located at one end of the receiving or transmitting unit 40 is adapted to be connected to the interface 2,2'. The antenna unit 44 located at the other end of the receiving or transmitting unit 40 is then located near the outside of the casing 5 so that wireless signals can be transmitted or received via the antenna 44.

For example, in case that the antenna unit 44 is located on a larger upper side of the transmitting or receiving unit 40 as for example shown in the embodiment of figure 3, the window 4,4' is located on a side of the casing 5 which is perpendicular to the entry opening of the cavity 3, as shown in the embodiment of figure 2. In the shown embodiments, the receiving or transmitting unit 40 has a card-like shape, which means that it is a relatively thin structure that is significantly larger and wider than thick. In the shown examples, the length of the card is larger than the width so that the shape is a lengthy-rectangular shape. The cavity 3,3' of the casing ha s a similar card-like shape so that the receiving or transmitting unit 40 can be received and housed securely and tightly. Any other suitable shapes, sizes and forms can be employed.

In the example of the antenna 44 of the embodiment of the transmitting and receiving unit 40 of figure 3, the main radiation direction of the antenna 44 of the receiving or transmitting unit 40 will be perpendicular to the upper face of the receiving or transmitting unit 40, in which case the window 4,4' is arranged in a wa y that it is aligned and matched with the antenna 44 when the receiving or transmitting unit 40 is completely inserted in the cavity 3,3'. Hereby , the specific size of the window 4,4' may vary depending on the radiation characteristics of the antenna 44, but it may be advantageous to provide a window 4,4' which has a sufficiently large size in order to allow the passing of wireless signals for a large variety of antennas with different radiation characteristics so that different kinds of receiving or transmitting units 40 can be used. The cavity 3,3' m ay be closed by a flap (not shown) automatically closing it when the transmitting and receiving unit 40 incompletely inserted or removed.

In case that the transmitting or receiving unit 40 does not completely disappear in the casing 5 when it is connected to the respective interface 2,2', the end of the receiving or transmitting unit in which the antenna 44 is located may still stick out of the casing 5 in the connected state. Therefore, the window 4,4' is not necessary since the casing is not blocking the transmission or reception of signals.

As shown in figure 2, two cavities 3,3' with respective interfaces 2,2' may be provided in the casing 5 on one preferably flat side 5a of the casing arranged perpendicular to each other. Hereby, it can be ensured that a good connectivity to other devices can be reached by choosing the cavity 3,3' and interface 2,2' depending on the radiation characteristics of the antenna 44 of the receiving or transmitting unit 40 being used.
In case that the antenna characteristics is Omni-directional, it may not be so relevant to have a plurality of cavities 3,3' and interfaces 2,2' arranged in differ ent locations and in different directions of the casing 5, and only a single cavity 3 and interface 2 may be sufficient.

However, in case that the antenna 44 has a directional antenna characteristic, i.e. a specific direction to which the main lobe of the antenna characteristics point, it is necessary to provide a variety of cavities 3,3' with respective interfaces 2,2' in order to give the user the opportunity to choose the cavity 3,3' which allows the best connection to the respective other devices.

More than two cavities 3,3' and interfaces 2,2' may be provided on one side 5a of the casing 5. Also, one or more cavities 3,3' and interfaces 2,2' may be provided on every side 5a, 5b, 5c of the casing 5, preferably arranged not parallel to each other, but in different angles to each other, so that various radiation directions with connected transmitting or receiving units 40 can be achieved. Further, a number of cavities 3,3' and interfaces 2,2' at specific locations, for example at corners of the casing 5 may be provided in a way that by the use of two or more receiving or transmitting units 40, a combined antenna radiation direction adapted to specific situations may be achieved.

Figure 3 shows an example of an embodiment of a receiving or transmitting unit 40 of the present invention. As discussed above, the receiving or transmitting unit 40 of this example has a card-like shape and provides the necessary elements and functionalities to receive or transmit signals in a wireless communication system via an antenna 44. The antenna 44 may be a single antenna or may consist of a plurality of antenna elements.

In the shown example, the receiving or transmitting unit 40 is adapted to communicate in the mm-wave frequency range or another suitable frequency range of an electromagnetic wireless communication system. Thus, the antenna 44 is connected to a conversion element 43, which can be an up-conversion element (in case of receiving functionality only), a down-conversion element (in case of transmitting functionality only) or an up and down conversion element (in case of receiving and transmitting functionality). The conversion element 43 is connected to a baseband and control processing unit 42. The base and control processing unit 42 is connected to a digital interface 41 which is adapted to communicate with an interface 2,2' of the respective vi deo display device or the real source device. The conversion element 43 is adapted to convert signals from the baseband up to the mm-wave frequency range in case of the transmitting functionality and is adapted to convert signals down from the mm-wave frequency range to the baseband in case of the receiving functionality of the receiving or transmitting unit 40. The baseband and control processing unit 42 performs the necessary basement processing and controls the operation of the receiving or transmitting unit 40 and forwards the received video data to the digital interface 41 or receives video data from the digital interface 41.

In case that the transmitting or receiving unit 40 is adapted to transmit or receive signals in a wireless communication system which does not base on electro-magnetic waves but on other communication technologies, such as for example but not limited not infrared light, a skilled person will know how to implement the necessary elements for processing signals between the antenna 44 and the interface 41.

The transmitting and receiving unit 40 can comprise a printed circuit board or any other suitable circuitry. Hereby, it can be covered by a caving (not shown) in order to protect the circuitry elements, whereby the digital interface 41 needs to be open so that it can be connected to the digital interface 2,2'. Further the antenna may be open in order to be able to transmit and receive wireless signals.

## Claims

1. Video data processing device (1,10,20) adapted to process video data, comprising one ore more digital interfaces (2,2') adapted to be connected to a transmitting or receiving unit (40) having an antenna (44) adapted to transmit or receive video data in a wireless communication system, each of said one or more digital interfaces (2,2') being located in a cavity (3,3') of a casing (5) of said data processing device, said cavity (3,3') being adapted to house a connected transmitting or receiving unit (40) so that said antenna (44) of said connected transmitting or receiving unit (40) is able to transmit or receive video data in said wireless communication system.

2. Video data processing device (1,10,20) according to claim 1,
wherein said cavity (3,3') is adapted to house a connected transmitting or receiving unit (40) in its entirety and said casing (5) comprises a window (4,4') aligned with said antenna (44) of said connected transmitting or receiving unit (40), said window (4,4') allowing said antenna (44) to transmit or receive video data in said wireless communication system.

3. Video data processing device (1,10,20) according to claim 2,
wherein said window (4,4') is an opening in said casing (5).

4. Video data processing device (1,10,20) according to claim 2,
wherein said window (4,4') comprises a material allowing the passing of signals of said wireless communication system.

5. Video data processing device (1,10,20) according to claim 1,
wherein said cavity (3,3') is adapted to house all parts of a connected transmitting or receiving unit (40) except the part comprising the antenna (44), allowing said antenna (44) to transmit or receive video data in said wireless communication system.

6. Video data processing device (1,10,20) according to one of the claims 1 to 5,
wherein said casing (5) has at least two sides (5a, 5b) which are perpendicular to each other, wherein each of said two sides comprises at least one of said digital interfaces located in a respective cavity (3,3').

7. Video data processing device (1,10) according to one of the claims 1 to 6,
wherein said casing (5) has at least one flat side (5a) comprising two of said digital interfaces (2,2') located in a respective cavity (3,3'), wherein said two digital interfaces (2,2') ar e arranged perpendicular to each other.

8. Video data processing device (1,10) according to one of the claims 1 to 7, being a video display device adapted to display video data, wherein said cavity (3,3') is adapted to house a connected receiving unit (40) so that said antenna (44) of said connected receiving unit (40) is able to receive video data in said wireless communication system and said video display device is adapted to display received video data on a video display (6).

9. Data processing device (1,10,20) according to one of the claims 1 to 7, being a video source device adapted to provide video data, wherein said cavity (3,3') is adapted to house a connected transmitting unit (40) so that said antenna (44) of said connected transmitting unit (40) is able to transmit video data in said wireless communication system.

10. Transmitting or receiving unit (40) adapted to be connected to a video data processing device (1,10,20) according to one of the claims 1 to 9, comprising at least one antenna (44) adapted to transmit or receive video data in a wireless communication system, and
a digital interface (41) adapted to be connected to the interface (2,2') of the video data processing device (1,10,20) in order to forward video data received by said at least one antenna (44) to the video data processing device (1,10,20) or to transmit video data provided by said video data processing device (1,10,20) in said wireless communication system.

11. Transmitting or receiving unit (40) according to claim 10,
wherein said at least one antenna (44) is located on one end of the transmitting or receiving unit (40) and said digital interface (41) is located at an opposite end of said transmitting or receiving unit (40).

12. Transmitting or receiving unit (40) according to claim 10 or 11,
wherein said at least one antenna (44) is an omni-directional antenna.

13. Transmitting or receiving unit (40) according to claim 10 or 11,
wherein said at least one antenna (44) is a directional antenna.

14. Transmitting or receiving unit (40) according to one of the claims 10 to 13, comprising two antennas respectively adapted to transmit or receive video data in a wireless communication system, wherein both antennas are directional antennas having directional characteristics different from each other.
